(19) Europäisches Patentamt / European Patent Office / Office européen des brevets

(11) **EP 3 712 833 A1**

(12) **EUROPEAN PATENT APPLICATION**
published in accordance with Art. 153(4) EPC

(43) Date of publication:
**23.09.2020 Bulletin 2020/39**

(21) Application number: **17932412.4**

(22) Date of filing: **17.11.2017**

(51) Int Cl.:
***G06Q 30/06*** *(2012.01)*

(86) International application number:
**PCT/JP2017/041549**

(87) International publication number:
**WO 2019/097694 (23.05.2019 Gazette 2019/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Ground Inc.**
**Tokyo 135-0064 (JP)**

(72) Inventor: **KOBAYASHI Takatsugu**
**Tokyo 135-0064 (JP)**

(74) Representative: **Viering, Jentschura & Partner mbB**
**Patent- und Rechtsanwälte**
**Am Brauhaus 8**
**01099 Dresden (DE)**

(54) **PRODUCT PLACEMENT SYSTEM, PRODUCT PLACEMENT METHOD, AND PRODUCT PLACEMENT PROGRAM**

(57) An inventory placement system 10 includes a grouping module 11, a shipment predicting module 12, and a placement determining module 13. The grouping module 11 compares each feature amount acquired for a certain item with each feature amount acquired for other items for the feature amounts acquired from shipment data, calculates a change amount between the corresponding feature amounts, and classifies a plurality of the items into a plurality of item groups on the basis of a magnitude of the change amount. The shipment predicting module 12 predicts a shipment amount of the item on the basis of a past shipment record. The placement determining module 13 determines a placement for each classified item group and placements for a plurality of the items on the basis of the shipment prediction by the shipment predicting module.

**Description**

TECHNICAL FIELD

The present invention relates to an inventory placement system, an inventory placement method, and an inventory placement program. More specifically, the present invention relates to an inventory placement system, an inventory placement method, and an inventory placement program for improving an efficiency of a process from receipt to shipment of items at the site of physical distribution.

BACKGROUND ART

At a site of physical distribution such as a distribution warehouse, a large number of items are received and shipped frequently, and the placement of inventory is changed from hour to hour. In order to efficiently receive and ship a large number of items, attempts are being made in predicting shipment timings and shipment amounts of the received items, and optimizing the inventory placement on the basis of the prediction (for example, Patent Document 1).

CITATION LIST

PATENT DOCUMENT

Patent Document 1: JP 2012-071974 A

SUMMARY OF THE INVENTION

PROBLEM TO BE SOLVED BY THE INVENTION

In predicting the shipment timings and the shipment amounts of the items, the amount of calculations increases as the number of items increases. Furthermore, in order to efficiently ship the items, it necessary to efficiently arranging (storing) the items in containers, shelves, boxes, or the like for storing and moving the items, in addition to the prediction of the shipment timing and the shipment amount. That is, for efficient shipping of the items, it is necessary to appropriately bring the items together according to weights, package size, and the like thereof (hereinafter, also referred to as "assorting"). As the number of items increases, a large amount of calculation is needed to perform the assorting of the items.
In view of the above-described circumstances, an object of the present invention is to provide an inventory placement system, an inventory placement method, and an inventory placement program capable of improving an efficiency of calculation of inventory placement.

MEANS FOR SOLVING THE PROBLEM

In order to solve the above problem, the present invention has the following configurations.
An inventory placement system including: a grouping means acquiring a plurality of feature amounts for each of a plurality of items from shipment data related to the plurality of items, comparing each of the feature amounts acquired for a certain item with each of the feature amounts acquired for other items and calculating a change amount between the corresponding feature amounts, and classifying the plurality of items into a plurality of item groups on the basis of a magnitude of the calculated change amount; a shipment predicting means acquiring a past shipment record for each of the items from the shipment data and predicting shipment amounts of the plurality of items on the basis of the acquired shipping record; and a placement determining means determining a placement for each of the classified item groups and a placement of the plurality of items on the basis of the shipment prediction by the shipment predicting means.
Further objects and other features of the present invention will become apparent from the following description of preferred embodiments with reference to the accompanying drawings.

ADVANTAGEOUS EFFECTS OF THE INVENTION

According to the present invention, it is possible to provide an inventory placement system, an inventory placement method, and an inventory placement program improving an efficiency of calculation of inventory placement.

BRIEF DESCRIPTION OF THE DRAWINGS

Fig. 1 is an explanatory diagram illustrating an outline of a distribution warehouse and an inventory placement system;

Fig. 2A is a flowchart illustrating an outline of processes of an inventory placement system;

Fig. 2B is a flowchart illustrating the outline of the processes of the inventory placement system (continued);

Fig. 3 is an explanatory diagram illustrating an example of feature amount comparison in a case where a feature amount is a shipment amount;

Fig. 4 is an explanatory diagram illustrating an example of feature amount comparison in a case where a feature amount is a shipment amount pattern;

Fig. 5 is an explanatory diagram illustrating an analysis method for a shipment amount pattern;

Fig. 6 is an explanatory diagram illustrating an example of feature amount comparison in a case where a feature amount is a shipment amount peak position;

Fig. 7 is a table illustrating shipment data of an Example;

Fig. 8 is a table illustrating shipment prediction results on the basis of shipment data;

Fig. 9 is a graph illustrating shipment amount patterns;

Fig. 10 is an explanatory diagram of analysis result of shipment amount patterns; and

Fig. 11 is a chart illustrating similarity between labels in comparison of shipment amount patterns.

DESCRIPTION OF THE EMBODIMENTS

[First Embodiment]

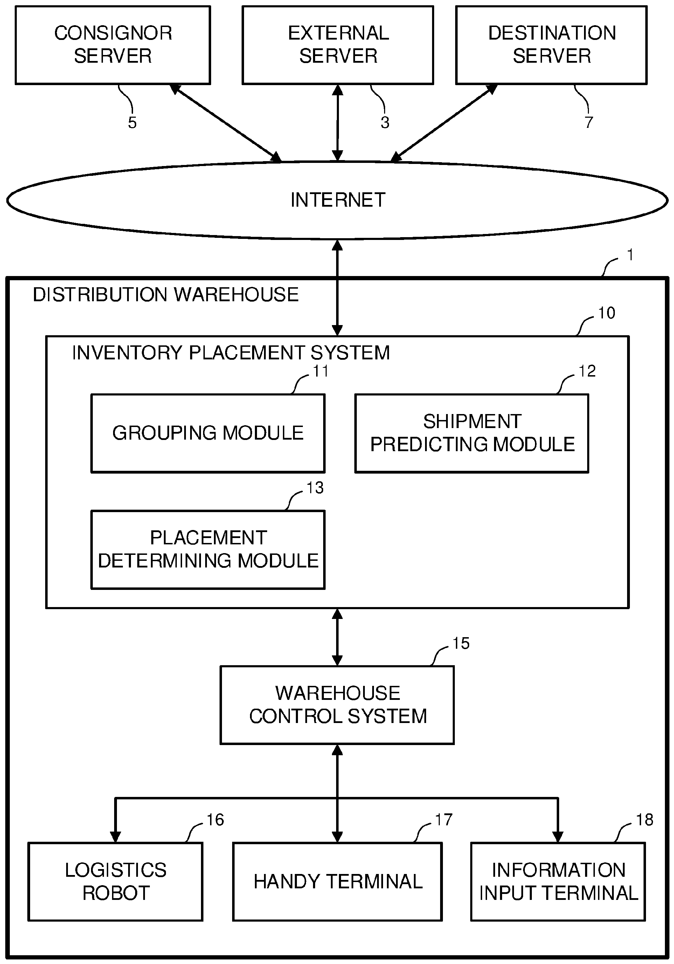

Hereinafter, an inventory placement system 10 according to a first embodiment will be described with reference to the drawings. Fig. 1 is an explanatory diagram illustrating an outline of a distribution warehouse 1 and the inventory placement system 10.

At least the inventory placement system 10 and a warehouse control system 15 are installed in the distribution warehouse 1. The inventory placement system 10 includes at least a grouping module 11 as a grouping means, a shipment predicting module 12 as a shipment predicting means, and a placement determining module 13 as a placement determining means. The inventory placement system 10 can realize an inventory placement method according to the present invention by allowing each of these modules to function. In addition, the inventory placement system 10 can be operated by allowing the computer to function as each of the above-mentioned means by the inventory placement program according to the present invention.

The items received from a consignor are stocked in the distribution warehouse 1. Then, the stocked item is shipped to a predetermined shipment destination on the basis of an order from a shipment orderer such as an electronic commerce (EC) trader. The inventory placement system 10 acquires item information from the consignor, performs grouping and shipment prediction on the basis of the item information and determines the optimum arrangement of the items in the distribution warehouse 1. The consignor may be the same party as the shipment orderer.

The warehouse control system 15 is connected to the inventory placement system 10, a logistics robot 16, a handy terminal 17, and an information input terminal 18 in an intercommunicating manner. The distribution warehouse 1 is provided with a plurality of logistics robots 16 and handy terminals 17 for receiving the inventory placement instructions generated by the warehouse control system 15 on the basis of the inventory placement determined by the inventory placement system 10. Communication between the warehouse control system 15 and the logistics robot 16 or the handy terminal 17 can be wireless communication such as wireless LAN. The warehouse control system 15 is configured so as to be able to grasp which position in the distribution warehouse 1 the logistics robot 16 and the handy terminal 17 are present via communication facilities, GPS, and the like.

The logistics robot 16 is configured so as to be capable of moving and arranging the items according to the inventory placement instruction. For example, the logistics robot 16 may be configured to travel freely, lift the shelf or pallet on which the items are arranged, move in a lifting state, and place the shelf or pallet on a predetermined location. For example, the logistics robot 16 may be configured to lift up one or a plurality of items with various means such as gripping and sucking with an arm.

The handy terminal 17 is a terminal carried by an operator who moves and places the items in the distribution warehouse 1. The handy terminal 17 notifies the operator of the inventory placement instruction, and the operator performs work such as movement and arrangement of the items according to the inventory placement instruction. The operator can transmit the information on completion of the work such as the movement and the arrangement of the items to the warehouse control system 15 via the handy terminal 17.

The warehouse control system 15 can also acquire the location of items, item information, and the like from the information input terminal 18. The information input terminal 18 can be an information processing terminal such as a smartphone, a tablet type terminal, a cellular phone, a computer, or the like. With such a configuration, in a case where the location of the items or the item information is information not digitized such as a ledger sheet, it is possible to more efficiently register such information in the warehouse control system 15. More specifically, the operator may input the information described in the ledger sheet or the like to the information input terminal 18 such as a smartphone or a computer, and thus, the information may be transmitted from the information input terminal 18 to the warehouse control system 15. In addition, even though the location of the item managed by the warehouse control system 15 is different from the location where the item is actually arranged in the warehouse, the information on the location where the item is arranged in the actual warehouse may be transmitted to the warehouse control system 15.

In the distribution warehouse 1, the items are stored in a storage space. More specifically, the storage space is a shelf (nest box), a pallet, a rack, or the like. Since the storage space has a certain size and load capacity, the items stored therein are limited. In addition, in order to efficiently store the items in a limited storage space, it is necessary to perform calculation by taking into consideration the combination of items. In such computation of optimization, especially in a case where the number of items is large, a terminal that performs processing is required to have high processing capability. In the present specification, consideration of a combination for efficiently storing items in a storage space is referred to as "assorting". The inventory placement system 10 enables efficient calculation of the problem of the assorting (assorting optimization).

The inventory placement system 10 calculates the inventory placement for more efficiently shipping items in the distribution warehouse 1 (inventory placement optimization). With such configuration, the optimized inventory placement is instructed to the warehouse control system 15. The inventory placement for more efficiently shipping items is, for example, arrangement of the items with closer shipment timing or the items with higher shipment frequency nearer to the shipping port. With such a configuration, it is possible to further reduce the moving distance and the number of processes of the logistics robot 16 and the operator in the warehouse.

The placement determining module 13 of the inventory placement system 10 determines the placement of each item. In optimizing the inventory placement, the placement determining module 13 may determine the inventory placement for each item group or may determine the inventory placement with some of the items among the plurality of items included in the item group as one unit. Some of the plurality of items included in the item group may be a combination of items stored in one storage space, for example, by assorting optimization. For example, in a case where a plurality of items is arranged in a single shelf by assorting optimization, the inventory placement system 10 can determine the inventory placement with the single shelf as a unit.

The inventory placement system 10 may be connected to an external server 3, a consignor server 5, and a destination server 7 outside the distribution warehouse 1 in an intercommunicating manner. The connection to the outside of the inventory placement system 10 may be connection via the Internet, and if necessary, the communication may be communication that can be performed in a concealed state using various kinds of encryption means.

The external server 3 is configured so as to be capable of performing various processes such as shipment prediction, inventory placement optimization, assorting optimization, and the like in cooperation with the inventory placement system 10. A plurality of external servers 3 may be connected. For example, it is possible to cause the external server 3 to perform the above-described various processes in units of an item group classified by the inventory placement system 10. With such a configuration, processing can be performed even if the number of items increases, without being limited by the processing capability of the terminal that operates the inventory placement system 10 installed in the distribution warehouse 1. That is, the inventory placement system 10 and a number of the external servers 3 can cooperate to perform various processes such as shipment prediction, inventory placement optimization, and assorting optimization by so-called distributed computing.

The inventory placement system 10 can receive item information from the consignor server 5. The item information includes item ID, item name, shipment date, shipment amount, weight of item including package, size of item in a packaged state, number of items, volume of storage space, staying days in warehouse, period average shipment frequency, period average shipment amount, and the like. The inventory placement system 10 predicts a future shipment amount from information such as previous shipment dates or previous shipment amounts as the item information (shipment prediction). The inventory placement system 10 is able to perform various processes such as shipment prediction, inventory placement optimization, and assorting optimization while appropriately using the information and the shipment prediction. In addition, the item ID can be an item ID corresponding to a detailed feature such as size difference or color difference of the same item name or a stock-keeping unit (SKU) but not an item ID for each item name.

In optimizing the placement, the placement determining module 13 of the inventory placement system 10 can determine the placement in the order from the item group with a larger representative value of the shipment amount and/or the shipment frequency for each item group out of a plurality of item groups. With such a configuration, it is possible to preferentially place an item group including items with a large shipment amount and a high shipment frequency. By preferentially placing an item group with a large shipment amount or a high shipment frequency, the item group with a large shipment amount and a high shipment frequency can be preferentially arranged near the shipping port with a high shipment efficiency. Herein, the representative value of the shipment amount and/or the shipment frequency for each item group is a value representative of the item group calculated on the basis of the shipment amount and the shipment frequency of each item included in the item group. For example, a representative value calculated as an arithmetic average, a median value, a total value, or the like on the basis of the shipment amount and the shipment frequency of each item can be used.

The placement determining module 13 can also determine the placement by taking into consideration the staying days of the items in the warehouse in optimizing the placement. For example, an item having long staying days in the warehouse is determined to be low or high in possibility of being shipped in the future, and in optimizing the placement, the priority can be lowered or increased.

The inventory placement system 10 can receive the item information of the returned item from the destination server 7. Herein, the returned item is an item which is returned from the shipment destination after the shipment of the item from the distribution warehouse 1 and is stored in the distribution warehouse 1. The reason for return is not particularly limited, and it may include defective product, unknown address, incorrect destination designation, an erroneous order by an orderer, and the like. The item information received from the destination server 7 includes the returned date, the reason for return, and the like in addition to the above-described item information received from the consignor server 5. As for the items received from the consignor, the inventory placement system 10 performs grouping, shipment prediction, and placement determination also for the returned items.

The inventory placement system 10 may transmit the result of the shipment prediction, the result of the placement determination, and the like to the consignor server 5 and the destination server 7 to share information with the consignor and the shipment destination. Therefore, it is possible to inform the consignor and the shipment destination of more accurate shipment timing, and thus, it is possible to notify more accurate delivery timing from the consignor to the orderer or to notify more accurate shipment timing to a delivery staff of the shipment destination, so that it is possible to shorten the waiting time for receipt of items and to improve efficiency of physical distribution.

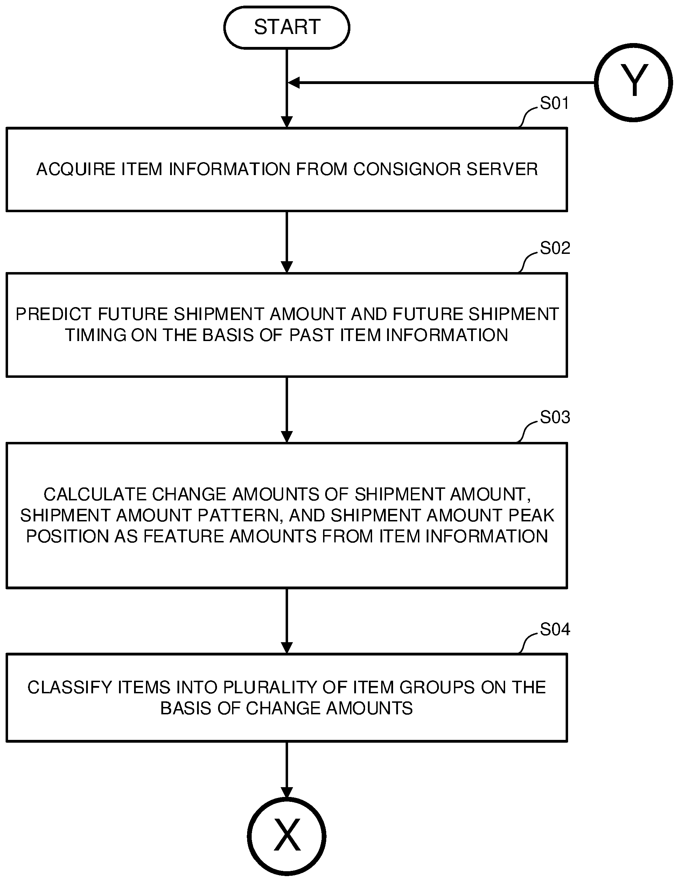

Hereinafter, a flow of the processes of the inventory placement system 10 will be described with reference to Fig. 2A and Fig. 2B. Fig. 2A and Fig. 2B are flowcharts illustrating the outline of the processes of the inventory placement system 10. X and Y in Fig. 2A correspond to X and Y in Fig. 2B.

When the process is started (START), the inventory placement system 10 acquires item information from the consignor server 5 (S01). The shipment predicting module 12 predicts future shipment amount and shipment timing on the basis of past shipment records included in the item information (shipment prediction) (S02). At this time, the past shipment records are, for example, the past shipment amount, shipment date, and the like included in the item information. By such shipment prediction, the shipment amount and the shipment timing in a predetermined period in the future are obtained, and the shipment amount pattern in the predetermined period in the future can be obtained by using the shipment amount and the shipment timing. The shipment amount pattern will be described later.

The grouping module 11 obtains a shipment amount, a shipment amount pattern, and a shipment amount peak position as feature amounts out of the item information obtained by the shipment prediction and compares the items to calculate the change amounts (S03). That is, the grouping module 11 compares the shipment amount, the shipment amount pattern, and the shipment amount peak position of a certain item with the shipment amount, the shipment amount pattern, and the shipment amount peak position of another item to obtain the respective change amounts. Then, the grouping module 11 calculates the total change amounts between the items by integrating the respective change amounts of the shipment amount, the shipment amount pattern, and the shipment amount peak position. In addition, the grouping module 11 classifies a plurality of items into a plurality of item groups on the basis of the calculated change amounts (S04). The calculation of the change amounts and the total change amounts by the grouping module 11 will be described later.

The inventory placement system 10 checks whether or not the information on the size and weight of the item is included in the item information obtained from the consignor server 5 in S01 for each of the classified item groups (S05). In addition, the determination in S05 may be performed at any timing after the item information is acquired from the consignor server 5 in S01.

In a case where the information on the size and weight of the item is not included in the item information (NO at S05), the inventory placement system 10 measures the size and weight of the item and enters the measured data of the size and weight in the item information (S06). In a case where the information on the size and weight of the item is included in the item information (YES at S05), or after the measured data of the size and weight measured in S06 is entered in the item information, the inventory placement system 10 checks whether or not the size, weight, and staying days of the item are within predetermined ranges (S07).

In a case where the size, weight, and staying days of the item are outside the predetermined ranges (NO at S07), the inventory placement system 10 recalculates the classification of the items into the item groups on the basis of the size, weight, and staying days of the item in addition to the magnitude of the change amount calculated in S03 and performs the classification into the item groups again (S08). At this time, as a result of the reclassification of the items into the item groups, some of the items may be classified into the same item group as before the reclassification.

In a case where the size, weight, and staying days of the item are within the predetermined ranges (YES at S07), or after reclassification of the items in S08, the placement determining module 13 determines, on the basis of the shipment prediction, the placement for each item group and the placement of the item (S09).

The inventory placement system 10 repeats the above processes (NO at S10). As the timing of repetition, at an appropriate timing, for example, every certain time, at a predetermined time, when the item information is updated, or the like, the process may be resumed from S01.

Hereinafter, the functions of the grouping function, the shipment prediction function, and the placement determination function of the respective modules of the grouping module 11, the shipment predicting module 12, and the placement determining module 13 provided in the inventory placement system 10 will be described in detail.

<Grouping Function>

The grouping function has a feature amount acquisition function for acquiring a plurality of feature amounts relating to each item.

Herein, the feature amount denotes a value which expresses trends and features of receipt and shipment of items. Specifically, as the feature amount, there may be exemplified a shipment amount of the item, a temporal change in shipment amount (hereinafter, also referred to as "shipment amount pattern"), and a position of a maximum peak of the temporal change in the shipment amount (hereinafter, referred to as "shipment amount peak position") in the distribution warehouse 1.

The shipment amount may be a shipment amount in a predetermined period. The predetermined period may be an arbitrary period such as, for example, past one month, past three months, past one year, or the like.

The temporal change (shipment amount pattern) in shipment amount denotes an increase or decrease in shipment amount which changes with the lapse of time. That is, in the case of being represented by a graph where the shipment amount is put on the vertical axis and time is put on the horizontal axis, the temporal change in the shipment amount can be represented as a pattern (shape) of the graph. The shipment amount pattern can be a pattern (shape) of the graph in a predetermined period.

The position of the maximum peak of the temporal change (shipment amount pattern) in shipment amount (shipment amount peak position) denotes the position of the peak in a predetermined period of the temporal change (shipment amount pattern) in shipment amount. That is, in the case of being represented by a graph where the shipment amount is put on the vertical axis and time is put on the horizontal axis, the shipment amount peak position can be expressed as a position (point in time) of the maximum peak in the pattern.

Hereinafter, a case where the feature amount is the shipment amount, the shipment amount pattern, and maximum peak position of the shipment amount pattern will be described. However, the feature amount is not limited thereto, and, for example, the shipment amount of the item group grouped in the past, the timing of implementation and expected effect of the past sales promotion activities or marketing activities of the item, weather states such as temperature, humidity, sunshine hours, and precipitation may be the feature amount. The feature amount acquisition function may be a function for arbitrarily and selectively acquiring these feature amounts according to the situation. The number (type) of feature amounts acquired by the feature amount acquisition function is not particularly limited.

The grouping function has a feature amount comparing function of comparing each feature amount acquired by the feature amount acquiring function with each feature amount with respect to other items and calculating a change amount for each feature amount.

In a case where the feature amount is the shipment amount, it is possible to compare the shipment amount of a certain item (item A) in a predetermined period with the shipment amount of another item (item B) in a predetermined period. As the comparison result, the difference between the shipment amounts of the item A and the item B can be calculated as the change amount. The predetermined periods of item A and item B in which the shipment amounts as target for comparison are obtained may be the same or different from each other. That is, depending on the situation, the shipment amounts of item A and item B in the same predetermined period may be compared, or the shipment amount in different predetermined periods may be compared. In comparing the shipment amounts, there may be a plurality of predetermined periods.

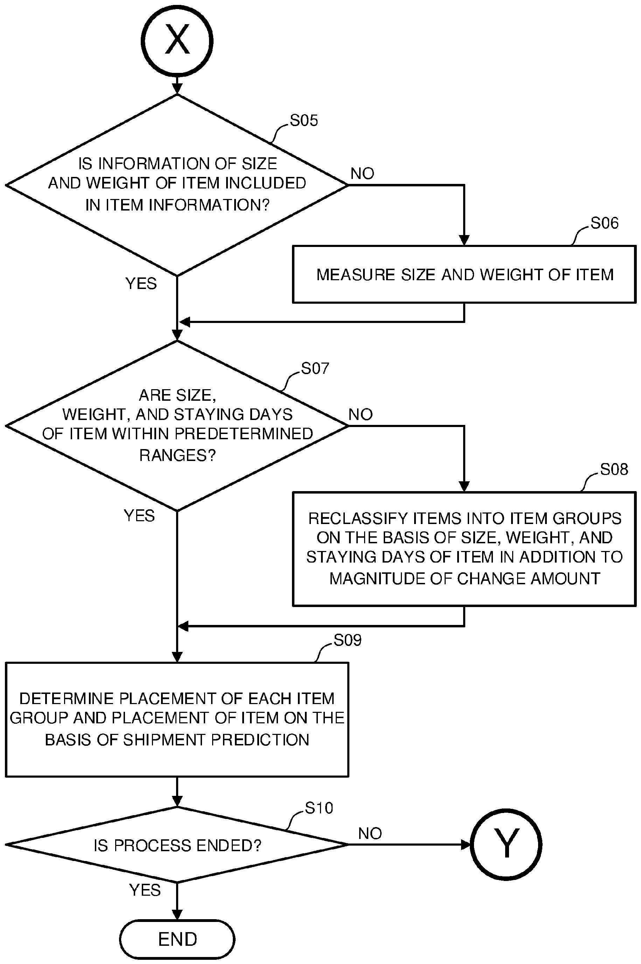

Fig. 3 is an explanatory diagram illustrating an example of feature amount comparison in a case where a feature amount is a shipment amount. In the graph illustrated in Fig. 3, the shipment amount of item A is indicated by a solid line, and the shipment amount of item B is indicated by a broken line. In this graph, the shipment amount is put on the vertical axis and time is put on the horizontal axis.

By comparing the item A and the item B in the predetermined period, for example, in the graphs of Fig. 3, the change amount is calculated as the differences D1, D2, D3, and D4 in the shipment amount in the respective predetermined periods P1, P2, P3, and P4. For example, the predetermined period P1 may be set to one day, and P2 may be set to the next one day or the like. In a case where there is a plurality of predetermined periods, the change amount can be calculated, for example, by the following Formula (1).

$$[(D1)^2 + (D2)^2 + (D3)^2 + (D4)^2 + \cdots]^{1/2} \quad \text{Formula (1)}$$

In Formula (1), D1, D2, D3, and D4 are the differences in shipment amount in the respective predetermined periods P1, P2, P3, and P4 as described above.

In a case where the feature amount is a temporal change (shipment amount pattern) of the shipment amount, it is possible to compare the shipment amount patterns of the item A and the item B in the predetermined period. At this time, the predetermined period may be the same period or different periods for the item A and the item B. By comparing the shipment amount pattern of the item A and the shipment amount pattern of the item B in different periods, the items that represent similar shipment amount patterns at different timings can be classified into the same group. Also, the length of the predetermined periods can be arbitrarily determined. A plurality of predetermined periods may be provided at an arbitrary timing (position) of a shipment amount pattern. For example, by using artificial intelligence, a predetermined period can be determined so as to include a shipment amount pattern portion having a characteristic shape so that characteristic shape portions of the shipment amount pattern can be selectively compared.

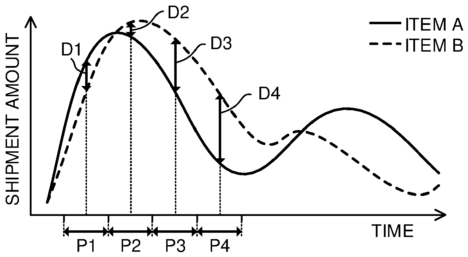

Fig. 4 is an explanatory diagram illustrating an example of feature amount comparison in a case where a feature amount is a shipment amount pattern. In the graph illustrated in Fig. 4, the shipment amount pattern of the item A is indicated by a solid line, and the shipment amount pattern of the item B is indicated by a broken line. In this graph, the shipment amount is put on the vertical axis and time is put on the horizontal axis. By comparing the shapes of the patterns illustrated in the graph of Fig. 4, it is possible to compare the shipment amount patterns as the feature amounts.

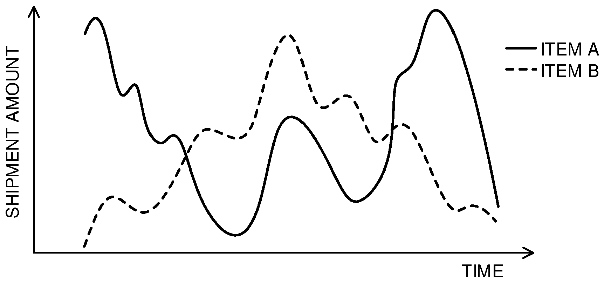

Next, an example of a method of analyzing a shipment amount pattern in order to compare shipment amount patterns as feature amounts will be described. Fig. 5 is an explanatory diagram illustrating an analysis method for a shipment amount pattern. In the graph illustrated in Fig. 5, the shipment amount pattern of the item A is indicated by a solid line. In this graph, the shipment amount is put on the vertical axis and time is put on the horizontal axis.

In the graph of Fig. 5, the shipment amount pattern of the item A is divided into each certain period. Although there is no particular limitation as to the certain period, it is preferable that the length of each certain period which divides the shipment amount pattern is the same. For example, in Fig. 5, the predetermined period is 100 days, and the certain period is 20 days. As a result, the shipment amount pattern is divided into five periods of 20 days each.

The shipment amount pattern divided in a certain period is smoothed at every certain period. Herein, the smoothing denotes determining a representative value of the shipment amount within each certain period and approximating the shipment amount pattern in each certain period to the representative value (constant value) for the shipment amount pattern in each divided certain period. The representative value may be determined by an arbitrary method and may be determined by obtaining, for example, a moving average, an arithmetic average of shipment amounts within the certain period, a median value, a total value, or the like.

Then, on the basis of the smoothed value (representative value) in each certain period, the label assigned to the zone determined according to the distribution of the shipment amount is given. Herein, the distribution of the shipment amount is a distribution of the shipment amount in an arbitrary period, and the zone can be determined as appropriate according to the distribution morphology. Herein, the arbitrary period may be a predetermined period or may be the entire past period including the predetermined period. Also, the target item may be limited to the same item, and the target may be expanded to similar items. For example, in a case where the distribution of the shipment amount is a normal distribution, it is possible to determine a range such as $1\sigma$, $1/2\sigma$, or 2a, from the average $\mu$ as one zone, and a zone deviating from the zone containing the average $\mu$ can be in the range of $1\sigma$, $2\sigma$, and the like.

For example, as illustrated in Fig. 5, as labels assigned to the zones, arbitrary labels such as "a", "b", or "c" can be assigned to the above zones in the ascending order of the shipment amount. Then, the label assigned to the zone including the smoothed value (representative value) in each certain period is given as the label of the shipment amount pattern in the certain period. For example, in the shipment amount pattern of Fig. 5, a label "c" is given in a period of 1 to 20 days, a label "a" is given in a period of 21 to 40 days, a label "b" is given in a period of 41 to 60 days, a label "b" is given in a period of 61 to 80 days, and a label "c" is given in a period of 81 to 100 days. As a result, the shipment amount pattern illustrated in Fig. 5 can be represented as a character string such as "cabbc".

By analyzing the shipment amount pattern and giving labels to every certain period in this manner, it is possible to represent the outline of the shipment amount pattern with a character string. In comparing the shipment amount patterns as the feature amounts, it is also possible to compare the character strings with each other.

In comparison between character strings, it is possible to compare the labels in a corresponding certain period. With respect to the similarity between labels, arbitrary numerical values can be given in advance. For example, a small value may be given to the case of a high similarity, and a large value may be given to the case of a low similarity. With such a configuration, in the case of comparing two labels, it is possible to indicate the similarity of the shipment amount patterns by the change amount (numerical value) according to a degree of approximation of the shipment amounts to which the labels are given. With respect to labels in a corresponding certain period, the similarity of each label can be expressed with the magnitude of the numerical value. By adding the change amount given for each certain period, the similarity of the shipment amount patterns in a predetermined period can be expressed with the magnitude of the numerical value.

For example, in a case where the shipment amount pattern (Fig. 5) of the item A is "cabbc" and the shipment amount pattern of the item B (comparison target, not illustrated) is "abcba", in the order from the first digits to the fifth digits of the respective character strings, "c" and "a", "a" and "b", "c" and "c", "b" and "b", and "c" and "c" are compared, and predetermined numerical values are given according to the similarity of the labels. By adding the obtained five numerical values, the similarity of the shipment amount patterns between the item A and the item B can be expressed with the numerical value.

In a case where the feature amount is the shipment amount peak position, it is possible to compare the peak positions of the shipment amount patterns of the item A and the item B in a predetermined period. At this time, it is preferable that the predetermined periods of the item A and the item B are the same period. More specifically, in comparing the peak positions of the shipment amount patterns of the item A and the item B, the time (distance) between the peak position of the item A and the peak position of the item B can be used as the change amount.

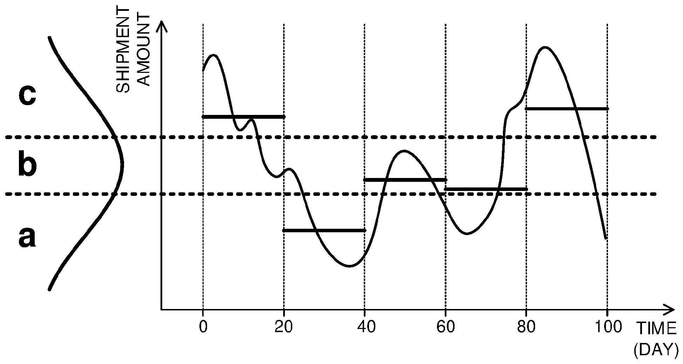

Fig. 6 is an explanatory diagram illustrating an example of feature amount comparison in a case where the feature amount is a shipment amount peak position. In the graph illustrated in Fig. 6, the shipment amount pattern of the item A is indicated by a solid line, and the shipment amount pattern of the item B is indicated by a broken line. In this graph, the shipment amount is put on the vertical axis and time is put on the horizontal axis. By comparing the peak positions of the patterns illustrated in the graph of Fig. 6, it is possible to compare shipment amount peak positions as the feature amounts. Specifically, the distance Dp illustrated in Fig. 6 is the distance between the peak position of the item A and the peak position of the item B.

By the above method, it is possible to compare the shipment amount, the shipment amount pattern, and the shipment amount peak position as the feature amount, and express the similarity as the change amount, respectively. By multiplying each of these change amounts by a coefficient and then adding, a total change amount between the two items can be obtained. The items can be classified into a plurality of item groups on the basis of this total change amount.

In calculating the total change amount, the coefficient to be multiplied to each change amount is not particularly limited, and an arbitrary real number can be adopted. These coefficients can be determined by using artificial intelligence, and thus, more appropriate coefficients may be configured so as to be capable of being determined by artificial intelligence learning from the comparison of the shipment prediction based on the determined coefficient and the actual shipment.

[Example]

Hereinafter, the inventory placement system 10 of the present invention will be described by using an example. It should be noted that, the present invention is not limited to this example.

In this example, a case where the inventory placement system 10 acquires a past shipment data from an electronic commerce (EC) trader which is a consignor will be described. When acquiring a shipment data from the consignor server 5 of the EC trader, the inventory placement system 10 analyzes the shipment record included in the shipment data and generates a shipment amount pattern for each item.

The inventory placement system 10 performs classification into a plurality of groups on the basis of the shipment data and the shipment amount pattern generated on the basis of the shipment data. More specifically, with respect to each item, the shipment amount, the shipment amount pattern, and the shipment amount peak position as the feature amount are compared with all other items, respectively, and the similarity is calculated as the total change amount.

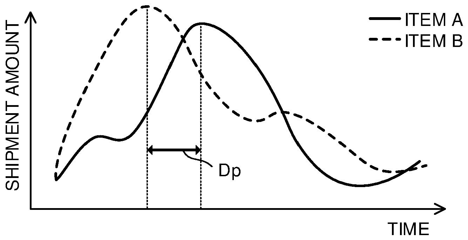

Fig. 7 is a table illustrating the shipment data of this example. In the shipment data, values of item ID, item name, shipment date, shipment amount (amount), and the like are contained. In the table of Fig. 7, columns of "item ID", "item name", "shipment date", and "shipment amount" are provided from the left. For example, the item name of the item ID "A0001" is "T-shirt (red)", and 11 pieces are shipped on January 1, 2017. In addition, eleven pieces of the same items are shipped on January 2, 2017, and one piece of the same items is shipped on January 3, 2017. The item name of the item ID "A0002" is "T-shirt (blue)", and eight pieces are shipped on January 1, 2017.

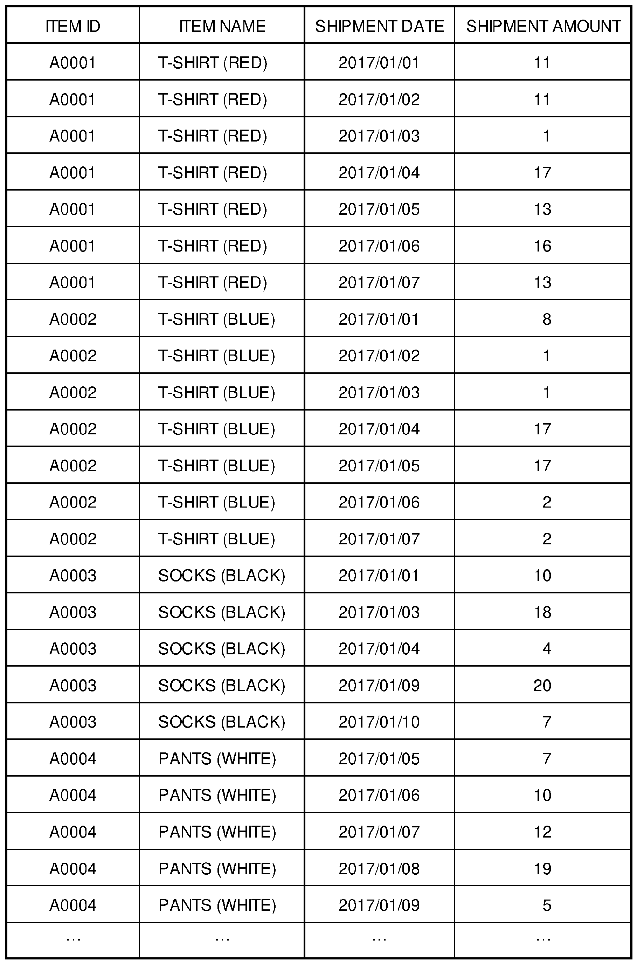

Herein, as a representative example, a comparison between item A0001 and item A0002 will be described. The shipment amount is predicted on the basis of the shipment data illustrated in the table of Fig. 7 by a known method in the art. Fig. 8 is a table listing shipment prediction results on the basis of the shipment data. In the table of Fig. 8, the prediction results of the shipment amount from December 22, 2017 to December 30, 2017 are illustrated for the item A0001 and the item A0002. At this time, the shipment amount in the predetermined period can be predicted not only on the basis of the past shipment data acquired from the consignor but also on the basis of any information regarding the same item. For example, the prediction can be performed on the basis of the past shipment data acquired from other consignor not only from a specific consignor, the shipment data of similar items, or sales, trends, various advertisements, or the like of the items.

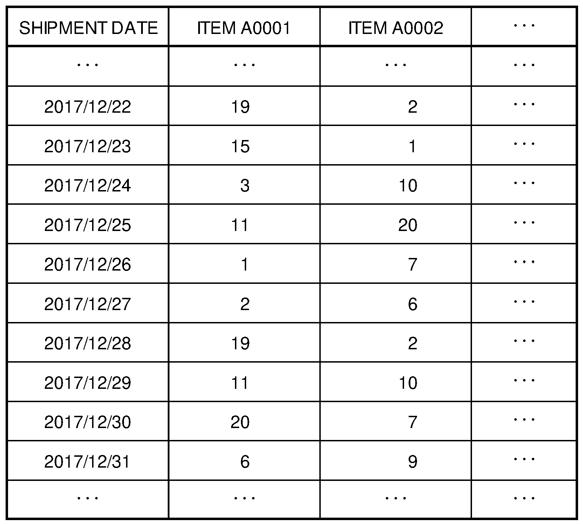

Fig. 9 is a graph illustrating a shipment amount pattern of the item A0001 and the item A0002 in the vicinity of a predetermined period. In Fig. 9, the shipment amount is put on the vertical axis and time is put on the horizontal axis.

(Comparison of Shipment Amounts)

With respect to the item A0001 and the item A0002, change amount of the shipment amount is obtained as follows on the basis of the differences D1, D2, and D3 of expected shipment amount on each day from December 25, 2017 to December 27, 2017 as the predetermined period.

$$[(D1)^2 + (D2)^2 + (D3)^2]^{1/2}$$

$$= [|11 - 20|^2 + |1 - 7|^2 + |2 - 6|^2]^{1/2}$$

$$\approx 11.5$$

(Comparison of Shipment Amount Patterns)

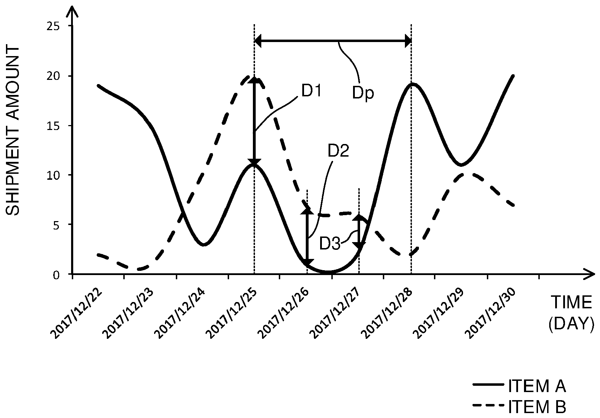

With respect to the item A0001 and the item A0002, the shipment amount patterns from December 22, 2017 to December 30, 2017 as a predetermined period are compared. Herein, the certain period in the case of analyzing the shipment amount pattern is three days. Fig. 10 is an explanatory diagram of analysis results of shipment amount patterns of the item A0001 and the item A0002. As illustrated in Fig. 10, the shipment amount pattern of the item A0001 is given a label on the basis of the shipment amount in each certain period and can be expressed as "bac". As illustrated in Fig. 10, the shipment amount pattern of the item A0002 is given a label on the basis of the shipment amount in each certain period and can be expressed as "bbc".

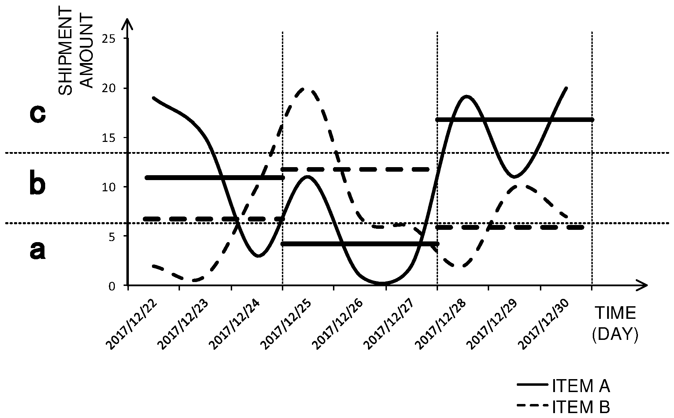

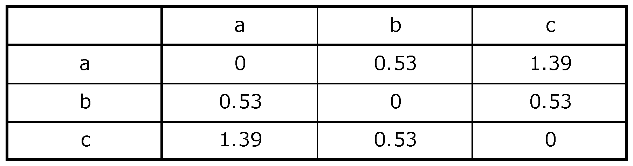

Fig. 11 is a chart illustrating the similarity between labels in the comparison of shipment amount patterns. For the item A0001 and the item A0002, the corresponding labels in each certain period are "b" and "ba", "a" and "b", and "c" and "a", and by adding these similarities, the change amount of the shipment amount pattern between the item A0001 and the item A0002 is obtained as follows.

$$(b, b) + (a, b) + (c, a)$$

$$= 0 + 0.53 + 1.39$$

$$= 1.92$$

(Comparison of Shipment Amount Peak Position)

The shipment amount peak position (date) of the item A0001 in the shipment amount pattern from December 22, 2017 to December 30, 2017 as the predetermined period is December 28, 2017. Similarly, the shipment amount peak position (date) of the item A0002 is December 25, 2017. Therefore, the distance between the item A0001 and the item A0002, that is, the change amount of the shipment amount peak position between the item A0001 and the item A0002 is obtained as 3.

The total change amount is obtained by multiplying each change amount of the shipment amount, the shipment mount pattern, and the shipment amount peak position obtained above with the optimum coefficient determined by artificial intelligence on the basis of comparison learning between the past shipment prediction and the actual shipping.

As described above, one-to-one comparison of items is performed for all item combinations, and the respective obtained total change amounts are allowed to be associated with the respective combinations. Then, on the basis of the magnitude of the value of the total change amount, a large number of items are classified (grouped) into a plurality of item groups.

With respect to the items classified for each item group, determination of placement and calculation of assorting optimization are performed for each item group. At this time, the inventory placement system 10 transmits the item information to the external server 3 for each item group, and calculation is performed in the external server 3. The external server 3 is connected to the inventory placement system 10 via the Internet. The number of external servers 3 corresponds to the number of item groups, the item information on each item included in one item group is transmitted to each external server 3, and calculation of the assorting optimization is performed in each external server 3.

More specifically, the item information herein includes item ID, item name, shipment date, shipment amount, weight of item including package, size of item in a packaged state, number of items, volume of accommodation box, staying days in warehouse, period average shipment frequency, period average shipment amount, and the like. On the basis of these information, each external server 3 optimizes (optimizes the assorting of) the combination of the items to be accommodated in each accommodation box and calculates the optimal inventory placement for improving the efficiency of the shipment. The calculation result is transmitted to the inventory placement system 10.

Next, the inventory placement system 10 predicts the shipment amount and the shipment timing of the item for each classified item group (shipment prediction). Then, on the basis of the shipment prediction, the inventory placement system 10 determines the placement for each item group and the placement of item so that the shipment will be most efficient.

Although the preferred embodiments of the present invention have been described above, the present invention is not limited thereto, and various modifications and changes are possible within the scope of the spirit of the present invention. For example, the present invention includes the following subject matters.

(Subject Matter 1) A subject matter is an inventory placement system including: a grouping means acquiring a plurality of feature amounts for each of a plurality of items from shipment data related to the plurality of items, comparing each of the feature amounts acquired for a certain item with each of the feature amounts acquired for other items and calculating a change amount between the corresponding feature amounts, and classifying the plurality of items into a plurality of item groups on the basis of a magnitude of the calculated change amount; a shipment predicting means acquiring a past shipment record for each of the items from the shipment data and predicting shipment amounts of the plurality of items on the basis of the acquired shipping record; and a placement determining means determining a placement for each of the classified item groups and a placement of the plurality of items on the basis of the shipment prediction by the shipment predicting means.

According to this subject matter, it is possible to improve an efficiency of calculation of the inventory placement.

(Subject Matter 2) The feature amounts may be two or more of a shipment amount of the items, a temporal change in the shipment amount of the items, and a position of a maximum peak of the temporal change in the shipment amount of the items.

(Subject Matter 3) In a case where one of the plurality of the feature amounts is the temporal change in the shipment amount, in comparison between the temporal change in the shipment amount of a certain item and the temporal change in the shipment amount of other items, a pattern of the acquired temporal change in the shipment amount may be smoothed at every certain period, the temporal change may be divided into a plurality of sections at each of the certain period in accordance with a value smoothed at each of the certain period, the section of the temporal change in the shipment amount for a certain item may be compared with the sections of the temporal change in the shipment amount of other items at each corresponding certain period, and a sum of change amounts determined according to a similarity between the compared sections may be obtained as a change amount of the temporal change of the shipment amount as the feature amount.

(Subject Matter 4) A total change amount of the feature amount between the items may be obtained by adding each of the change amounts of the feature amounts multiplied by a coefficient, and a plurality of the items may be classified into a plurality of the item groups on the basis of the total change amount.

(Subject Matter 5) In a case where a size and/or weight of the item is outside a predetermined range, the plurality of items may be classified into a plurality of item groups on the basis of the size and/or weight of the item in addition to the basis of the magnitude of the calculated change amount.

(Subject Matter 6) The placement determining means may have a configuration in which a plurality of computers is connected, and the computers may determine the placement of each of the item groups and the placement of the plurality of items for one or more of the plurality of item groups classified by the grouping means.

(Subject Matter 7) The placement determining means may determine the placement of the items in an order from an item group having a larger representative value of the shipment amount and/or shipment frequency for each of the item groups among the plurality of item groups.

(Subject Matter 8) Another subject matter may be an inventory placement method including: a grouping step acquiring a plurality of feature amounts for each of a plurality of items from a shipment data related to the plurality of items, comparing each of the feature amounts acquired for a certain item with each of the feature amounts acquired for other items and calculating a change amount between the corresponding feature amounts, and classifying the plurality of items into a plurality of item groups on the basis of a magnitude of the calculated change amount; a shipment predicting step predicting shipment amounts and shipment timings of the plurality of items; and a placement determining step determining a placement for each of the classified item groups and a placement of the plurality of items on the basis of a shipment prediction in the shipment predicting step.

(Subject Matter 9) A further subject matter may be an inventory placement program allowing a computer to execute to function as: a grouping means acquiring a plurality of feature amounts for each of a plurality of items from a shipment data related to the plurality of items, comparing each of the feature amounts acquired for a certain item with each of the feature amounts acquired for other items and calculating a change amount between the corresponding feature amounts, and classifying the plurality of items into a plurality of item groups on the basis of a magnitude of the calculated change amount; a shipment predicting means predicting shipment amounts and shipment timings of the plurality of items; and a placement determining means determining a placement for each of the classified item groups and a placement of the plurality of items on the basis of the shipment prediction by the shipment predicting means.

**Claims**

1. An inventory placement system comprising:

   a grouping means acquiring a plurality of feature amounts for each of a plurality of items from shipment data related to the plurality of items,
   comparing each of the feature amounts acquired for a certain item with each of the feature amounts acquired for other items and calculating a change amount between the corresponding feature amounts, and
   classifying the plurality of items into a plurality of item groups on the basis of a magnitude of the calculated change amount;
   a shipment predicting means acquiring a past shipment record for each of the items from the shipment data and predicting shipment amounts of the plurality of items on the basis of the acquired shipping record; and
   a placement determining means determining a placement for each of the classified item groups and a placement of the plurality of items on the basis of the shipment prediction by the shipment predicting means.

2. The inventory placement system according to claim 1, wherein the feature amounts are two or more of a shipment amount of the items, a temporal change in the shipment amount of the items, and a position of a maximum peak of the temporal change in the shipment amount of the items.

3. The inventory placement system according to claim 2,
   wherein, in a case where one of the plurality of the feature amounts is the temporal change in the shipment amount,
   in comparison between the temporal change in the shipment amount of a certain item and the temporal change in the shipment amount of other items,
   a pattern of the acquired temporal change in the shipment amount is smoothed at every certain period,
   the temporal change is divided into a plurality of sections at each of the certain period in accordance with a value smoothed at each of the certain period,
   the section of the temporal change in the shipment amount for a certain item is compared with the sections of the temporal change in the shipment amount of other items at each corresponding certain period, and
   a sum of change amounts determined according to a similarity between the compared sections is obtained as a change amount of the temporal change of the shipment amount as the feature amount.

4. The inventory placement system according to any one of claims 1 to 3, wherein a total change amount of the feature amount between the items is obtained by adding each of the change amounts of the feature amounts multiplied by a coefficient, and a plurality of the items are classified into a plurality of the item groups on the basis of the total change amount.

5. The inventory placement system according to any one of claims 1 to 4, wherein, in a case where a size and/or weight of the item is outside a predetermined range, the plurality of items are classified into a plurality of item groups on the basis of the size and/or weight of the item in addition to the basis of the magnitude of the calculated change amount.

6. The inventory placement system according to any one of claims 1 to 5, wherein the placement determining means has a configuration in which a plurality of computers is connected, and
   the computers determine the placement of each of the item groups and the placement of the plurality of items for one or more of the plurality of item groups classified by the grouping means.

7. The inventory placement system according to any one of claims 1 to 6, wherein the placement determining means determines the placement of the items in an order from an item group having a larger representative value of the shipment amount and/or shipment frequency for each of the item groups among the plurality of item groups.

8. An inventory placement method comprising:

   a grouping step acquiring a plurality of feature amounts for each of a plurality of items from a shipment data related to the plurality of items,

comparing each of the feature amounts acquired for a certain item with each of the feature amounts acquired for other items and calculating a change amount between the corresponding feature amounts, and

classifying the plurality of items into a plurality of item groups on the basis of a magnitude of the calculated change amount;

a shipment predicting step predicting shipment amounts and shipment timings of the plurality of items; and

a placement determining step determining a placement for each of the classified item groups and a placement of the plurality of items on the basis of a shipment prediction in the shipment predicting step.

9. An inventory placement program allowing a computer to function as:

a grouping means acquiring a plurality of feature amounts for each of a plurality of items from a shipment data related to the plurality of items,

comparing each of the feature amounts acquired for a certain item with each of the feature amounts acquired for other items and calculating a change amount between the corresponding feature amounts, and

classifying the plurality of items into a plurality of item groups on the basis of a magnitude of the calculated change amount;

a shipment predicting means predicting shipment amounts and shipment timings of the plurality of items; and

a placement determining means determining a placement for each of the classified item groups and a placement of the plurality of items on the basis of the shipment prediction by the shipment predicting means.


**Amended claims under Art. 19.1 PCT**

1. An inventory placement system comprising:

a grouping means acquiring a plurality of feature amounts for each of a plurality of items from shipment data related to the plurality of items,

comparing each of the feature amounts acquired for a certain item with each of the feature amounts acquired for other items and calculating a change amount between the corresponding feature amounts, and

classifying the plurality of items into a plurality of item groups on the basis of a magnitude of the calculated change amount;

a shipment predicting means acquiring a past shipment record for each of the items from the shipment data and predicting shipment amounts of the plurality of items on the basis of the acquired shipping record; and

a placement determining means determining a placement for each of the classified item groups and a placement of the plurality of items on the basis of the shipment prediction by the shipment predicting means,

wherein, in a case where a size and/or weight of the item is outside a predetermined range, the grouping means classifies the plurality of items into a plurality of item groups on the basis of the size and/or weight of the item in addition to the basis of the magnitude of the calculated change amount.

2. The inventory placement system according to claim 1, wherein the feature amounts are two or more of a shipment amount of the items, a temporal change in the shipment amount of the items, and a position of a maximum peak of the temporal change in the shipment amount of the items.

3. The inventory placement system according to claim 2,

wherein, in a case where one of the plurality of the feature amounts is the temporal change in the shipment amount, in comparison between the temporal change in the shipment amount of a certain item and the temporal change in the shipment amount of other items,

a pattern of the acquired temporal change in the shipment amount is smoothed at every certain period,

the temporal change is divided into a plurality of sections at each of the certain period in accordance with a value smoothed at each of the certain period,

the section of the temporal change in the shipment amount for a certain item is compared with the sections of the temporal change in the shipment amount of other items at each corresponding certain period, and

a sum of change amounts determined according to a similarity between the compared sections is obtained as a change amount of the temporal change of the shipment amount as the feature amount.

4. The inventory placement system according to any one of claims 1 to 3, wherein a total change amount of the feature amount between the items is obtained by adding each of the change amounts of the feature amounts multiplied by a coefficient, and a plurality of the items are classified into a plurality of the item groups on the basis of the total change amount.

5. (Cancelled)

6. The inventory placement system according to any one of claims 1 to 4, wherein the placement determining means has a configuration in which a plurality of computers is connected, and
the computers determine the placement of each of the item groups and the placement of the plurality of items for one or more of the plurality of item groups classified by the grouping means.

7. The inventory placement system according to any one of claims 1 to 4 and 6, wherein the placement determining means determines the placement of the items in an order from an item group having a larger representative value of the shipment amount and/or shipment frequency for each of the item groups among the plurality of item groups.

8. An inventory placement method comprising:

a grouping step acquiring a plurality of feature amounts for each of a plurality of items from a shipment data related to the plurality of items,
comparing each of the feature amounts acquired for a certain item with each of the feature amounts acquired for other items and calculating a change amount between the corresponding feature amounts, and
classifying the plurality of items into a plurality of item groups on the basis of a magnitude of the calculated change amount;
a shipment predicting step predicting shipment amounts and shipment timings of the plurality of items; and
a placement determining step determining a placement for each of the classified item groups and a placement of the plurality of items on the basis of a shipment prediction in the shipment predicting step
wherein, in a case where a size and/or weight of the item is outside a predetermined range, the plurality of items are classified into a plurality of item groups on the basis of the size and/or weight of the item in addition to the basis of the magnitude of the calculated change amount in the grouping step.

9. An inventory placement program allowing a computer to function as:

a grouping means acquiring a plurality of feature amounts for each of a plurality of items from a shipment data related to the plurality of items,
comparing each of the feature amounts acquired for a certain item with each of the feature amounts acquired for other items and calculating a change amount between the corresponding feature amounts, and
classifying the plurality of items into a plurality of item groups on the basis of a magnitude of the calculated change amount;
a shipment predicting means predicting shipment amounts and shipment timings of the plurality of items; and
a placement determining means determining a placement for each of the classified item groups and a placement of the plurality of items on the basis of the shipment prediction by the shipment predicting means,
wherein, in a case where a size and/or weight of the item is outside a predetermined range, the grouping means classifies the plurality of items into a plurality of item groups on the basis of the size and/or weight of the item in addition to the basis of the magnitude of the calculated change amount.

CONSIGNOR SERVER

EXTERNAL SERVER

DESTINATION SERVER

5

3

7

INTERNET

1

DISTRIBUTION WAREHOUSE

10

INVENTORY PLACEMENT SYSTEM

11

GROUPING MODULE

12

SHIPMENT PREDICTING MODULE

13

PLACEMENT DETERMINING MODULE

15

WAREHOUSE CONTROL SYSTEM

16

LOGISTICS ROBOT

17

HANDY TERMINAL

18

INFORMATION INPUT TERMINAL

START

Y

S01
ACQUIRE ITEM INFORMATION FROM CONSIGNOR SERVER

S02
PREDICT FUTURE SHIPMENT AMOUNT AND FUTURE SHIPMENT TIMING ON THE BASIS OF PAST ITEM INFORMATION

S03
CALCULATE CHANGE AMOUNTS OF SHIPMENT AMOUNT, SHIPMENT AMOUNT PATTERN, AND SHIPMENT AMOUNT PEAK POSITION AS FEATURE AMOUNTS FROM ITEM INFORMATION

S04
CLASSIFY ITEMS INTO PLURALITY OF ITEM GROUPS ON THE BASIS OF CHANGE AMOUNTS

X

X

S05
IS INFORMATION OF SIZE
AND WEIGHT OF ITEM INCLUDED
IN ITEM INFORMATION?

NO

S06
MEASURE SIZE AND WEIGHT OF ITEM

YES

S07
ARE SIZE,
WEIGHT, AND STAYING DAYS
OF ITEM WITHIN PREDETERMINED
RANGES?

NO

S08
RECLASSIFY ITEMS INTO ITEM GROUPS
ON THE BASIS OF SIZE, WEIGHT, AND
STAYING DAYS OF ITEM IN ADDITION TO
MAGNITUDE OF CHANGE AMOUNT

YES

S09
DETERMINE PLACEMENT OF EACH ITEM
GROUP AND PLACEMENT OF ITEM ON THE
BASIS OF SHIPMENT PREDICTION

S10
IS PROCESS ENDED?

NO

Y

YES

END

| ITEM ID | ITEM NAME | SHIPMENT DATE | SHIPMENT AMOUNT |
|---|---|---|---|
| A0001 | T-SHIRT (RED) | 2017/01/01 | 11 |
| A0001 | T-SHIRT (RED) | 2017/01/02 | 11 |
| A0001 | T-SHIRT (RED) | 2017/01/03 | 1 |
| A0001 | T-SHIRT (RED) | 2017/01/04 | 17 |
| A0001 | T-SHIRT (RED) | 2017/01/05 | 13 |
| A0001 | T-SHIRT (RED) | 2017/01/06 | 16 |
| A0001 | T-SHIRT (RED) | 2017/01/07 | 13 |
| A0002 | T-SHIRT (BLUE) | 2017/01/01 | 8 |
| A0002 | T-SHIRT (BLUE) | 2017/01/02 | 1 |
| A0002 | T-SHIRT (BLUE) | 2017/01/03 | 1 |
| A0002 | T-SHIRT (BLUE) | 2017/01/04 | 17 |
| A0002 | T-SHIRT (BLUE) | 2017/01/05 | 17 |
| A0002 | T-SHIRT (BLUE) | 2017/01/06 | 2 |
| A0002 | T-SHIRT (BLUE) | 2017/01/07 | 2 |
| A0003 | SOCKS (BLACK) | 2017/01/01 | 10 |
| A0003 | SOCKS (BLACK) | 2017/01/03 | 18 |
| A0003 | SOCKS (BLACK) | 2017/01/04 | 4 |
| A0003 | SOCKS (BLACK) | 2017/01/09 | 20 |
| A0003 | SOCKS (BLACK) | 2017/01/10 | 7 |
| A0004 | PANTS (WHITE) | 2017/01/05 | 7 |
| A0004 | PANTS (WHITE) | 2017/01/06 | 10 |
| A0004 | PANTS (WHITE) | 2017/01/07 | 12 |
| A0004 | PANTS (WHITE) | 2017/01/08 | 19 |
| A0004 | PANTS (WHITE) | 2017/01/09 | 5 |
| … | … | … | … |

| SHIPMENT DATE | ITEM A0001 | ITEM A0002 | ・・・ |
|---|---|---|---|
| ・・・ | ・・・ | ・・・ | ・・・ |
| 2017/12/22 | 19 | 2 | ・・・ |
| 2017/12/23 | 15 | 1 | ・・・ |
| 2017/12/24 | 3 | 10 | ・・・ |
| 2017/12/25 | 11 | 20 | ・・・ |
| 2017/12/26 | 1 | 7 | ・・・ |
| 2017/12/27 | 2 | 6 | ・・・ |
| 2017/12/28 | 19 | 2 | ・・・ |
| 2017/12/29 | 11 | 10 | ・・・ |
| 2017/12/30 | 20 | 7 | ・・・ |
| 2017/12/31 | 6 | 9 | ・・・ |
| ・・・ | ・・・ | ・・・ | ・・・ |

| | a | b | c |
|---|---|---|---|
| a | 0 | 0.53 | 1.39 |
| b | 0.53 | 0 | 0.53 |
| c | 1.39 | 0.53 | 0 |

## INTERNATIONAL SEARCH REPORT

| International application No. |
| --- |
| PCT/JP2017/041549 |

### A. CLASSIFICATION OF SUBJECT MATTER
Int. Cl. G06Q30/06(2012.01)i

According to International Patent Classification (IPC) or to both national classification and IPC

### B. FIELDS SEARCHED

Minimum documentation searched (classification system followed by classification symbols)
Int. Cl. G06Q30/06

Documentation searched other than minimum documentation to the extent that such documents are included in the fields searched
Published examined utility model applications of Japan    1922-1996
Published unexamined utility model applications of Japan  1971-2018
Registered utility model specifications of Japan          1996-2018
Published registered utility model applications of Japan  1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2016-222455 A (JFE STEEL CORP.) 28 December 2016, abstract, claim 1, paragraph [0027] (Family: none) | 1, 4, 6-9<br>2-3, 5 |
| Y<br>A | JP 2004-75319 A (MURATA MACHINERY LTD.) 11 March 2004, abstract, claim 1, paragraph [0005] (Family: none) | 1, 4, 6-9<br>2-3, 5 |

☐ Further documents are listed in the continuation of Box C.  ☐ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07.02.2018 | 20.02.2018 |

| Name and mailing address of the ISA/<br>    Japan Patent Office<br>    3-4-3, Kasumigaseki, Chiyoda-ku,<br>    Tokyo 100-8915, Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012071974 A